(19) Europäisches Patentamt

European Patent Office

Office européen des brevets

(11) **EP 1 427 558 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(51) Int Cl.[7]: **B23D 79/02**, B21C 37/08, B23K 37/08

(21) Anmeldenummer: 02772039.0

(22) Anmeldetag: **11.09.2002**

(86) Internationale Anmeldenummer:
**PCT/DE2002/003259**

(87) Internationale Veröffentlichungsnummer:
**WO 2003/026827 (03.04.2003 Gazette 2003/14)**

(54) **VERFAHREN ZUR ERHÖHUNG DER ERMÜDUNGSFESTIGKEIT BEI GESCHWEISSTEN ROHREN**

METHOD FOR INCREASING THE FATIGUE RESISTANCE OF WELDED PIPES

PROCEDE PERMETTANT D'AUGMENTER LA RESISTANCE A LA FATIGUE DE TUYAUX SOUDES

(84) Benannte Vertragsstaaten:
**AT DE FR GB IT**

(30) Priorität: **21.09.2001 DE 10148317**
**09.09.2002 DE 10244060**

(43) Veröffentlichungstag der Anmeldung:
**16.06.2004 Patentblatt 2004/25**

(73) Patentinhaber: **Mannesmannröhren-Werke AG**
**45473 Mülheim a.d. Ruhr (DE)**

(72) Erfinder:
• **KNAUF, Gerhard**
**47249 Duisburg (DE)**

• **MAREWSKI, Ulrich**
**45894 Gelsenkirchen (DE)**
• **REEPMEYER, Oscar**
**40668 Meerbusch (DE)**

(74) Vertreter: **Meissner, Peter E., Dipl.-Ing.**
**Meissner & Meissner,**
**Patentanwaltsbüro,**
**Hohenzollerndamm 89**
**14199 Berlin (DE)**

(56) Entgegenhaltungen:
**DE-A- 1 752 476      DE-A- 2 602 639**
**US-A- 2 923 208      US-A- 3 758 740**

**Beschreibung**

Die Erfindung betrifft ein Verfahren zur Erhöhung der Ermüdungsfestigkeit bei geschweißten Rohren, insbesondere längsnahtgeschweißte Großrohre, gemäß dem Oberbegriff des Patentanspruches 1.

Bei Pipelines für Fluide, bei Lagerbehältern und Druckgasspeichern sind zeitlich veränderliche Innendruckbeanspruchungen die bestimmende Größe für die Dimensionierung der verwendeten Rohrkomponenten. Die für veränderliche Innendruckbeanspnrchungen eingesetzten Rohrkomponenten sollten deshalb eine möglichst hohe Ermüdungsfestigkeit aufweisen.

Die Ermüdungs- bzw. Schwellfestigkeit von geschweißten Rohren wird im wesentlichen durch die starke Kerbwirkung der Schweißnaht eingeschränkt. Gegenüber nahtlosen Rohren wird daher im geltenden Regelwerk die Schwellfestigkeit geschweißter Rohre deutlich geringer eingestuft.

Aus der DE-OS 2602639 ist ein Verfahren und eine Maschine zum Bearbeiten wendelförmiger geschweißter Rohre bekannt. Bei diesem Verfahren wird die Schweißnahtüberhöhung an der Innen- und Außenseite des Rohres gleichzeitig und jeweils an der gegenüberliegenden Schweißnahtstelle und dem Schweißnaht-Wendelverlauf folgend bis maximal auf Rohrwanddicke spanabhebend abgearbeitet. Die spanabhebende Bearbeitung erfolgt wahlweise durch Fräsen oder Schleifen.

Die Schweißnahtüberhöhung wird soweit abgearbeitet, dass die dann entstehende ebene Nahtfläche bündig mit der Außen- und Innenfläche des Rohres verläuft. Durch die Beseitigung der Schweißnahtüberhöhung auf der Innen- und Außenseite wird die Bruchdehnung und Biegefestigkeit des Rohres erhöht.

Aufgabe der Erfindung ist es ein Verfahren zur Bearbeitung des Schweißnahtbereiches anzugeben, das mit geringem Aufwand bei geschweißten Rohren zu einer signifikanten Erhöhung der Ermüdungsfestigkeit führt.

Diese Aufgabe wird ausgehend vom Oberbegriff in Verbindung mit den Merkmalen des Anspruches 1 gelöst. Vorteilhafte Weiterbildungen sind jeweils Gegenstand von Unteransprüchen.

Nach der Lehre der Erfindung wird der sich nach dem Schweißen ergebende scharfkantige geometrische Übergang von der Schweißnaht zum angrenzenden Rohrkörper durch eine spanabhebende Bearbeitung mindestens auf der Innenseite abgerundet. Die Abrundung ist vorzugsweise ein Radius, kann aber auch eine beliebig stetige Krümmung sein. Als effektiv hat sich herausgestellt, wenn der Abrundungsradius größer 2 mm ist Vorzugsweise liegt derAbrundungsradius im Bereich von 4 - 15 mm. Die spanende Bearbeitung kann ein Fräsen oder ein Schleifen sein.

Der Vorschlag, den Übergang abzurunden, bietet gegenüber einem kompletten Abtrag der Nahtüberhöhung den Vorteil eines deutlich geringeren Arbeitsaufwandes sowie der einfacheren Realisierung mittels einer automatischen Schleifmaschine. Darüber hinaus besteht nicht die Gefahr, dass nach dem Abschleifen ein Absatz zwischen der Schweißnahtkante und dem Rohrkörper verbleibt.

Versuche haben ergeben, dass insbesondere die Abrundung der Nahtüberhöhung auf der Innenseite den größten Effekt bringt. Die Beseitigung des scharfkantigen Übergangs auf der Außenseite bringt zwar noch eine weitere Verbesserung, steht oftmals aber nicht mehr in einem vernünftigen Verhältnis zum erhöhten Aufwand.

Die praktische Bedeutung des beschriebenen Verfahrens besteht in

- einer deutlichen Erhöhung der Ermüdungsfestigkeit von geschweißten Rohren,
- der einfacheren Realisierung und sichereren Durchführung.

Weitere Merkmale, Vorteile und Einzelheiten der Erfindung ergeben sich aus der nachfolgenden Beschreibung von einem in einer Zeichnung dargestellten Ausführungsbeispiel.

Es zeigen:

**Figur 1** einen Querschnitt durch den Schweißnahtbereich eines geschweißten Rohres mit abgerundetem Übergang,

**Figur 2** als Diagramm die Abhängigkeit der Formzahl $K_t$ vom Abrundungsradius und der Wanddicke des Rohres,

**Figur 3** als Diagramm die Abhängigkeit der Schwellspannung und Lastwechselanzahl von der Formzahl $K_t$.

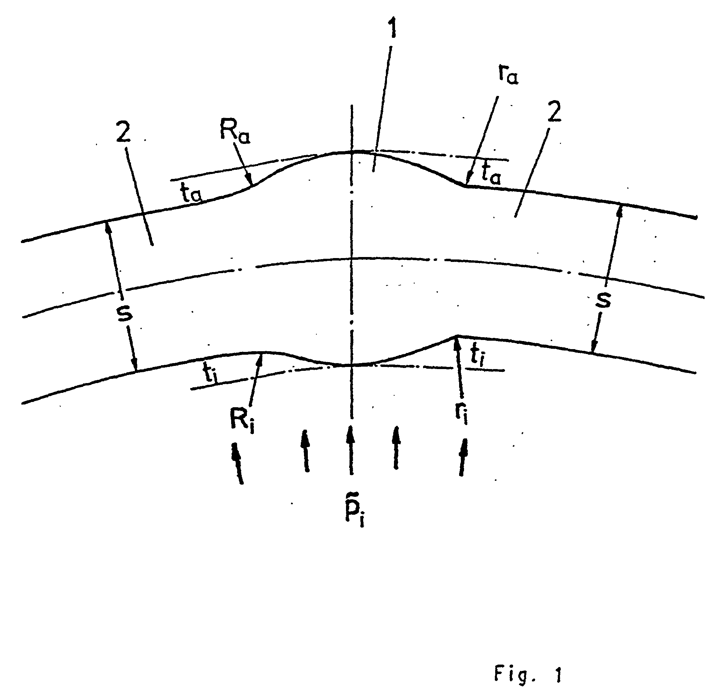

In **Figur 1** ist in der rechten Bildhälfte der Zustand des unbehandelten Schweißnahtbereiches dargestellt. Die in der Darstellung verwendeten Buchstaben haben die nachfolgende Bedeutung

$p_i$ = Innendruck (schwellend)
$s$ = Rohrwanddicke
$t_a$ = Schweißnahtüberhang außen
$t_i$ = Schweißnahtüberhang innen
$r_a$ = scharfkantiger Übergang außen
$r_i$ = scharfkantiger Übergang innen
$R_a$ = Abrundungsradius außen
$R_i$ = Abrundungsradius innen

Charakteristisch für den unbehandelten Schweißnahtbereich ist der scharfkantige Übergang $r_a$, $r_i$ von der Schweißnaht 1 zum angrenzenden Rohrkörper 2 sowohl auf der Außen- als auch auf der Innenseite. Dieser scharfkantige Übergang $r_a$, $r_i$ mindert die Ermüdungsfestigkeit, insbesondere bei schwellender Innen-

druckbelastung $p_i$. Diese tritt auf, wenn das Rohr als Speicher benutzt wird, der häufig beladen und entiaden wird.

Die linke Bildhälfte zeigt den behandelten Schweißnahtbereich. In diesem Ausführungsbeispiel ist sowohl auf der Innen- als auch auf der Außenseite der Übergang stark abgerundet mit einem Radius $R_a$, $R_i$ von mindestens 2 mm. Die Spannungserhöhung infolge der unbehandelten Schweißnaht lässt sich mittels der Formzahl unter Zuhilfenahme der Beziehung:

$$K_t = 1 + \frac{1}{\sqrt{0,5A/t + 5A/s - (1 + 2A/s)^2}}$$

abschätzen. Sie ist eine rein geometrische Größe und gibt die Größe der Spannungsspitze im Verhältnis zum ungestörten Rohrquerschnitt an. Die in der aufgestellten Beziehung verwendeten Buchstaben haben die folgende Bedeutung.

A = Übergang (wahlweise kann, $r_i$, $r_a$, $R_i$, $R_a$ eingesetzt werden)
t = Nahtüberhöhung (wahlweise kann $t_i$ oder $t_a$ eingesetzt werden)
s = Rohrwanddicke

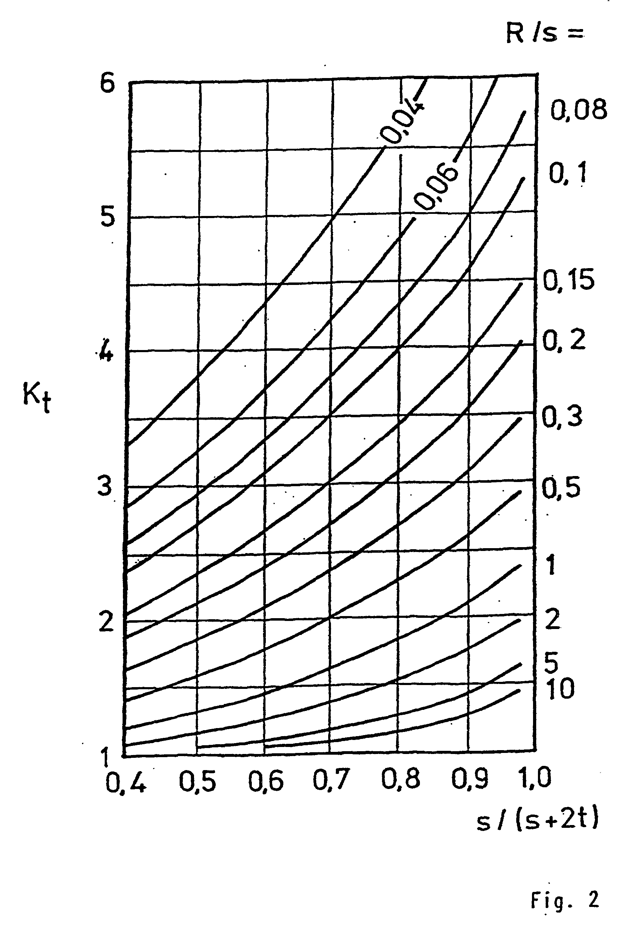

Eine Verminderung der Formzahl $K_t$ wird durch Abrundung des ursprünglichen scharfen Überganges $r_i$ bzw. $r_a$ auf den Radius $R_i$ bzw. $R_a$ erreicht, der infolge eines Schleif- oder Fräsvorganges erzeugt wird. Die Abhängigkeit zwischen der Formzahl und der Größe des Abrundungsradius zeigt **Figur 2.**

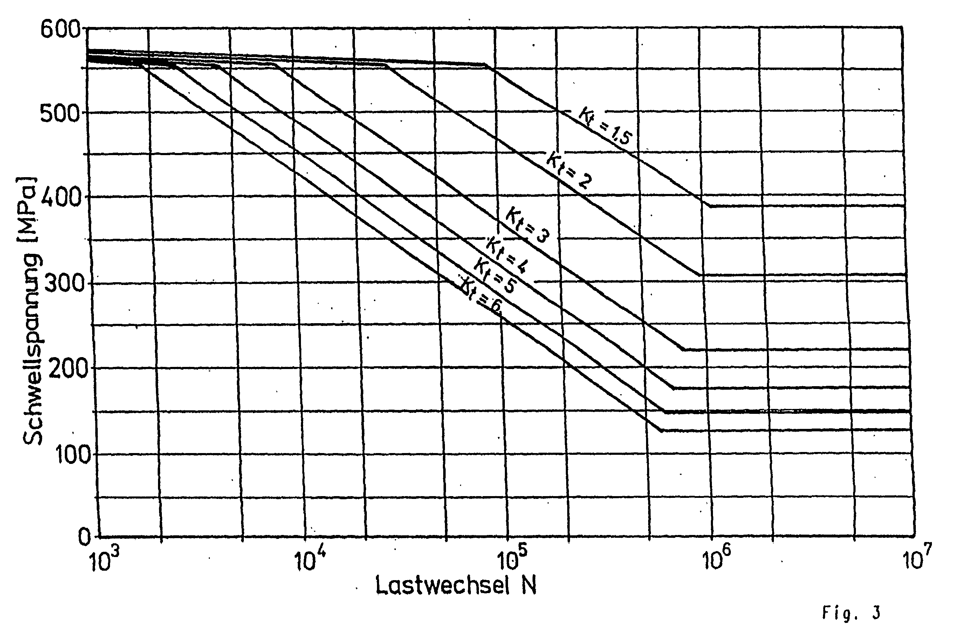

Die Fomizahl $K_t$ bestimmt im wesentlichen die Zeit- und Dauerfestigkeitseigenschaften des geschweißten Rohres. In **Figur 3** ist beispielhaft die Abhängigkeit der Schwellfestigkeit eines geschweißten Rohres ($R_m \approx 600$ MPa) von der Größe der Fomizahl $K_t$ dargestellt. So lässt sich z. B. durch eine Verminderung des Formfaktors $K_t = 5$ auf $K_t = 2$ eine Erhöhung der Dauerfestigkeit um den Faktor 2 und eine Verzehnfachung der zulässigen Lastspielamplituden im Zeitfestigkeitsbereich erreichen.

**Patentansprüche**

1. Verfahren zur Erhöhung der Ermüdungsfestigkeit bei geschweißten Rohren, insbesondere längsnahtgeschweißte Großrohre, mit einer einen Überhang auf der Innen- und Außenseite aufweisenden Schweißnaht
**dadurch gekennzeichnet,**
**dass** der sich nach dem Schweißen ergebende scharfkantige geometrische Übergang von der Schweißnaht zum angrenzenden Rohrkörper durch eine spanabhebende Bearbeitung mindestens auf der Innenseite abgerundet wird.

2. Verfahren nach Anspruch 1
**dadurch gekennzeichnet,**
**dass** der scharfkantige Übergang auch auf der Außenseite abgerundet wird.

3. Verfahren nach Anspruch 1 und 2
**dadurch gekennzeichnet,**
**dass** die Abrundung ein Radius ist.

4. Verfahren nach Anspruch 3
**dadurch gekennzeichnet,**
**dass** der Abrundungsradius mindestens 2 mm beträgt.

5. Verfahren nach Anspruch 4
**dadurch gekennzeichnet,**
**dass** der Abrundungsradius im Bereich von 4 - 15 mm liegt.

6. Verfahren nach den Ansprüchen 1 bis 5
**dadurch gekennzeichnet,**
**dass** die spanabhebende Bearbeitung ein Fräsen ist.

7. Verfahren nach den Ansprüchen 1 bis 5
**dadurch gekennzeichnet,**
**dass** die spanabhebende Bearbeitung ein Schleifen ist.

**Claims**

1. Method for increasing the fatigue resistance of welded pipes, in particular large, longitudinally seam-welded pipes, having a weld seam which has an overhang on the inside and outside,
**characterised in that**
the sharp-edged geometric transition, which is produced after welding, from the weld seam to the adjacent pipe body is rounded off at least on the inside by a metal-cutting treatment.

2. Method according to claim 1,
**characterised in that**
the sharp-edged transition is also rounded off on the outside.

3. Method according to claim 1 and 2,
**characterised in that**
the rounding-off is a radius.

4. Method according to claim 3,
**characterised in that**
the rounding-off radius is at least 2 mm.

5. Method according to claim 4,
**characterised in that**
the rounding-off radius is in the range of 4 - 15 mm.

6. Method according to claims 1 to 5,
   **characterised in that**
   the metal-cutting treatment is milling.

7. Method according to claims 1 to 5,
   **characterised in that**
   the metal-cutting treatment is grinding.

**Revendications**

1. Procédé pour augmenter la résistance à la fatigue de tubes soudés, en particulier de grands tubes à cordon de soudure longitudinal, avec un cordon de soudure présentant une saillie sur la face intérieure et extérieure,
   **caractérisé en ce que** le raccordement géométrique à arêtes vives résultant après le soudage du cordon de soudure au corps de tube adjacent est arrondi par un usinage par enlèvement de matière au moins sur la face intérieure.

2. Procédé selon la revendication 1,
   **caractérisé en ce que** le raccordement à arêtes vives est arrondi également sur la face extérieure.

3. Procédé selon la revendication 1 et 2,
   **caractérisé en ce que** l'arrondi est circulaire.

4. Procédé selon la revendication 3,
   **caractérisé en ce que** le rayon d'arrondi est d'au moins 2 mm.

5. Procédé selon la revendication 4,
   **caractérisé en ce que** le rayon d'arrondi est situé dans la plage de 4 à 15 mm.

6. Procédé selon les revendications 1 à 5,
   **caractérisé en ce que** l'usinage par enlèvement de matière est un fraisage.

7. Procédé selon les revendications 1 à 5,
   **caractérisé en ce que** l'usinage par enlèvement de matière est un meulage.

Fig. 1

Fig. 2

Fig. 3

EP 1 427 558 B1